(19) Europäisches Patentamt
European Patent Office
Office européen des brevets

(11) **EP 4 535 214 A1**

(12) **EUROPEAN PATENT APPLICATION**

(43) Date of publication:
**09.04.2025 Bulletin 2025/15**

(21) Application number: **24203543.4**

(22) Date of filing: **30.09.2024**

(51) International Patent Classification (IPC):
***G06F 30/13*** (2020.01)     ***G06F 30/27*** (2020.01)
***G06F 119/04*** (2020.01)

(52) Cooperative Patent Classification (CPC):
**G06F 30/27; G06F 30/13; G06F 2119/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.10.2023 IT 202300020460**

(71) Applicant: **Ets s.r.l.**
**00142 Roma (IT)**

(72) Inventors:
• **FORIA, Federico**
**00142 ROMA (IT)**
• **CALICCHIO, Mario**
**00142 ROMA (IT)**

(74) Representative: **Luppi, Emanuele**
**Brunacci & Partners S.r.l.**
**Via Pietro Giardini, 625**
**41125 Modena (MO) (IT)**

(54) **COMPUTER-IMPLEMENTED METHOD FOR THE CALCULATION OF THE STRUCTURAL VULNERABILITY OF A TUNNEL**

(57)     The computer-implemented method for the calculation of the structural vulnerability of a tunnel comprises the following phases:
- acquisition of at least one data set relating to structural characteristics of a tunnel under consideration and to the geomorphological characteristics of the construction site of the tunnel under consideration;
- provision of a first data set as input to an artificial trained neural network;

- processing of the data set by the trained neural network to obtain as output at least one vulnerability index of the tunnel under consideration, relating to the probability of the occurrence of damage to the tunnel under consideration itself depending on a geomorphological phenomenon;
- mapping of the tunnel under consideration depending on the vulnerability index.

## Description

Technical Field

The present invention relates to a computer-implemented method for the calculation of the structural vulnerability of a tunnel.

Background Art

The construction of a tunnel can be done by means of different technologies, all of which involve the removal of soil at the construction site and a preliminary consolidation of the inner surface of the cavity thus generated in order to temporarily stabilize the soil by means of an initial medium, usually consisting of shotcrete and rock fragments, corrugated systems with insulation or diaphragm walls.

Finally, the construction of the final inner lining is carried out, which consists of concrete as cast-in-place lining or as precast segments.

The support for the tunnel is provided by the lining, which stabilizes the soil around it and resists groundwater infiltration.

Basic materials for tunnel lining comprise cast-in-place concrete, precast concrete, cast iron and steel.

Once the tunnel is built, it is common for a maintenance program to be established to preserve the condition of the tunnel itself.

It is easy to appreciate, in fact, that the weather and geomorphological conditions of the construction site can lead to more or less rapid deterioration of the tunnel and, over time, to its yielding.

An efficient maintenance program allows reducing the associated costs, decreasing the number of tunnel closures and subsequent user inconvenience, increasing public safety and ensuring adequate levels of service.

In detail, maintenance programs are generally preceded by performing in situ surveys in order to periodically monitor the occurrence of structural defects.

Nowadays, tunnel inspections are still carried out by operators with partial or total disruption of the line. The information collected concerns the types of defects identified as fractures (longitudinal, transverse, reticular or local), water-related phenomena (wet spots, leaks or seepage) and other types of damage. The severity of each defect is quantified through coefficients and the combination thereof allows the prioritization of interventions to be determined.

It is known, therefore, to make a correlation between the defects detected in the tunnel and its structural conditions, together with the geomorphological context of the construction site. Such correlation can also have a predictive effect by allowing prediction of the possible evolution of the structural defects over time. For example, in a high-humidity context, known methodologies make it possible to predict the evolution of the tunnel condition depending on such humidity.

It should be considered, however, that in addition to the normal deterioration of the tunnel, it may be subject to exceptional phenomena that are difficult to predict in advance and the impact of which on the relevant structure is difficult to quantify, e.g., in the case of a seismic event of unexpected intensity or the need to build an additional infrastructure nearby.

In this case, the traditional correlation between the tunnel defects and the related structural conditions, together with the geomorphological context of the construction site, is unreliable and cannot be used to make design assessments.

The probability of damage to a structure as a result of a phenomenon of a given intensity defines the vulnerability index of the structure itself.

Vulnerability takes part in the calculation of infrastructure risk, which is defined by the formula

$$R = p \times e \times v$$

where R is the risk, p is the hazard, i.e., the probability of occurrence of a phenomenon potentially within a certain time interval and a certain geographical area, e is the exposure, i.e., the probability of involvement in damage of a sensitive target, and v is precisely the vulnerability, i.e., the probability of damage occurring as a result of the phenomenon.

Therefore, it is evident how the definition of the vulnerability parameter of the tunnel is crucial to the calculation of the risk of the tunnel itself.

To date, known methods are based on performing in situ surveys carried out as a result of the geomorphological phenomenon and their monitoring over time.

However, the calculation of vulnerability involves a complicated and expensive procedure that, in any case, requires simplifications of the phenomenological context affecting the tunnel. Moreover, the phenomenological dynamics of the tunnel boundary conditions are too complex to be accurately modeled by numerical simulations.

This implies that the complexity of the phenomena involved causes very high calculation times that are not compatible with the projected or necessary design timelines. At the same time, a simplification of the vulnerability calculation results in insufficient resolution and/or completeness of information.

Description of the Invention

The main aim of the present invention is to devise a computer-implemented method for the calculation of the structural vulnerability of a tunnel which allows reducing the timelines required to determine the vulnerability index of the tunnel. Another object of the present invention is to devise a computer-implemented method for the calculation of the structural vulnerability of a tunnel which allows obtaining accurate and reliable vulnerability indices.

A further object of the present invention is to devise a computer-implemented method for the calculation of the structural vulnerability of a tunnel which allows obtaining predictive indices of the tunnel's structural vulnerability.

Another object of the present invention is to devise a computer-implemented method for the calculation of the structural vulnerability of a tunnel which allows the aforementioned drawbacks of the prior art to be overcome within the framework of a simple, rational, easy and effective to use as well as affordable solution.

The aforementioned objects are achieved by this computer-implemented method for the calculation of the structural vulnerability of a tunnel having the characteristics of claim 1.

Brief Description of the Drawings

Other characteristics and advantages of the present invention will become more apparent from the description of a preferred, but not exclusive, embodiment of a computer-implemented method for the calculation of the structural vulnerability of a tunnel.

Embodiments of the Invention

In the context of this disclosure, the term "structural vulnerability" relates to the probability of damage to which a structure is subjected as a result of a phenomenon of a given intensity.

Vulnerability takes part in the calculation of infrastructure risk, which is defined by the formula

$$R = p \text{ x } e \text{ x } v$$

where R is the risk, p is the hazard, i.e., the probability of occurrence of a phenomenon potentially within a certain time interval and a certain geographical area, e is the exposure, i.e., the probability of involvement in damage of a sensitive target, and v is precisely the vulnerability, i.e., the probability of damage occurring as a result of the phenomenon.

This method is intended to be implemented using an electronic processor such as a computer, tablet, smartphone, etc.

The method according to the invention comprises at least one phase of acquisition of at least a first data set relating to the structural features of a tunnel under consideration and to the geomorphological features of the construction site of the tunnel under consideration.

Conveniently, the data in the first set are selected from the list comprising: type of tunnel, size of the tunnel, physical-mechanical features of the structural elements making up the tunnel, construction materials, geographic location, type of ground, presence of watercourses, seismic risk of the construction site and presence of additional infrastructure. It is easy to appreciate how the first data set can also comprise additional types of data.

The method also comprises an optional phase of acquisition of at least a second data set relating to the structural defects found in the tunnel under consideration. Conveniently, the data in the second set are selected from the list comprising: presence and extent of seepage, presence and extent of cracks, presence and extent of damage to the pavement, radial displacement of the tunnel lining layer. It is easy to appreciate how the second data set can also comprise additional types of data.

The method then comprises a phase of acquisition, also optional, of at least a third data set relating to at least one geomorphological phenomenon impacting the construction site.

It is specified that the expression "geomorphological phenomenon" relates to both a natural and a manmade event that affects the construction site and can result in a change in the structural features of the tunnel under consideration. This phenomenon is also to be understood as progressive over time.

Conveniently, the data in the third set are selected from the list comprising: occurrence of flood phenomenon and relevant extent, occurrence of seismic phenomenon and relevant magnitude, changes in traffic conditions within the tunnel, implementation of new infrastructure in the proximity of the construction site. It is easy to appreciate how the third data set can also comprise additional types of data.

The phases of data acquisition are carried out at least partly by means of at least one scanning device adapted to scan the tunnel under consideration.

In combination or as an alternative thereof, the phases of data acquisition are carried out at least partly by loading pre-measured and/or predetermined data.

For example, the data in the first set related to the structural features and the data in the second set are preferably acquired by means of direct scanning of the tunnel. On the other hand, the data in the first set related to the geomorphological ground conditions can be based on literature data.

The method then comprises the phases of:

- provision of the first data set, of the second data set and of the third data set as input to an artificial trained neural network; and

- processing of the data by the trained neural network to obtain as output at least one vulnerability index of the tunnel under consideration, relating to the probability of the occurrence of damage to the tunnel itself depending on a geomorphological phenomenon.

Finally, the method comprises a phase of mapping of the tunnel under consideration depending on the vulnerability index. The phase of mapping allows the areas of the tunnel under consideration and the relevant vulnerability index thereof to be visualized graphically in order to enable efficient scheduling of maintenance interventions.

The electronic processor is programmed with an artificial neural network configured to receive input data from the outside and to process and provide at least one output data item.

Artificial neural networks belong to the class of machine learning algorithms and consist of a series of highly interconnected nodes and parallel non-linear equations which are used to simultaneously process data and perform functions. Artificial neural networks are known as universal predictors and can approximate any continuous function under certain conditions, given the availability of relevant input parameters.

In other words, the algorithm "learns" the inherent patterns of a predefined data set so that it can make accurate predictions based on new information about the same problem.

Infrastructure risk analyses can be made more efficient using artificial neural networks because of their ability to handle many correlated parameters with relationships that are not clearly defined or are difficult to express explicitly.

Specifically, the artificial neural network is trained, as will be better described later in the disclosure, to process and provide the vulnerability index.

During the training phase, the results are compared with experimental data in order to verify, validate and evaluate the reliability of the output.

In addition, the use of an artificial neural network makes it possible to develop a vulnerability index that is either descriptive, i.e., indicative of the current tunnel situation, or predictive, i.e., indicative of a possible future scenario. Conveniently, the phase of processing comprises at least the following steps:

- calculation and assignment of a damage deviation value to each data item in the first set depending on the second data set. The purpose of this step is to establish the extent of influence that the measured defect features of the tunnel under consideration and the geomorphological features of the construction site may have with respect to the occurrence and evolution of a given structural defect;
- calculation and assignment of a phenomenological deviation value to each data item in the third set depending on the second data set. The purpose of this step is to establish the extent of influence that the geomorphological phenomenon may have with respect to the occurrence and evolution of a given structural defect;
- combination of the damage deviation values and of the phenomenological deviation values to obtain the vulnerability index of the tunnel under consideration.

The combination of the two values allows for the overall consideration of how the geomorphological phenomenon may affect the structural features of the tunnel and the geomorphological features of the construction site to determine the occurrence and/or evolution of a given structural defect.

Conveniently, the phase of processing comprises the steps of:

- spatial subdivision of the tunnel under consideration into spatial sub-elements; and
- subdivision of the data for each spatial sub-element.

For example, if the tunnel is considered as a cylindrical body, the spatial sub-elements can be obtained by means of cross sections of the cylinder performed at predefined distances from each other.

As is easy to appreciate, a tunnel can extend even for many kilometers and have differences in the way it is constructed. Similarly, the construction site may have even considerable differences along the development of the tunnel, which may affect the structure of the tunnel differently. Again, the geomorphological phenomenon may affect one particular area more intensely than another.

The step of assignment of the damage deviation value is, therefore, carried out for each spatial sub-element and the step of combination is defined for each spatial sub-element to obtain respective vulnerability sub-indexes.

Advantageously, the phase of mapping is carried out by means of chromatic subdivision of a two-dimensional representation of the tunnel under consideration depending on the vulnerability index.

In detail, the phase of mapping is carried out depending on each vulnerability sub-index, for each spatial sub-element.

Through the use of measured and/or pre-measured data, a descriptive vulnerability index can be obtained.

In accordance with a possible embodiment, the method may also provide that at least one of the data sets may comprise hypothesized data. The term "hypothesized data" relates to data on tunnels not yet constructed and in the design phase, to construction sites not yet determined, structural defects that have not yet occurred and/or potential geomorphological phenomena.

In this case, the phase of processing is also carried out depending on the hypothesized data and allows a predictive vulnerability index to be obtained.

Such a construction embodiment makes it possible to refine the design stages of the tunnel and to avoid construction errors.

As stated above, the phase of processing is carried out by an artificial trained neural network.

Therefore, prior to the phase of processing, the method comprises at least one phase of providing an artificial neural network and at least one phase of training the artificial neural network.

The training phase comprises at least the following steps:

- provision as input of at least a first data set relating to the construction properties of a test tunnel and to the geomorphological properties of the construction site of the test tunnel;
- provision as input of at least a second data set relating to the structural defects found in the test tunnel;
- provision as input of at least a third data set relating to at least one geomorphological phenomenon impacting the construction site;
- provision as input of a defect found in the tunnel, possibly classified into defect levels, carried out by an operator in a controlled manner;
- processing of the correlations between the at least one first data set, the at least one second data set and the at least one third data set to obtain as output a vulnerability index of the test tunnel, carried out by an operator in a controlled manner;
- repetition of the steps of provision and processing for at least one different test tunnel and/or different geomorphological phenomena to obtain the artificial trained neural network.

In actual facts, during the phase of training, the operator enters data and defects based on previous measurements and/or estimates.

By doing so, at the end of training, the artificial neural network recognizes particular situations and automatically assigns vulnerability indices based on what was learned in the phase of training.

The phase of training can also be carried out on data from the same tunnel but acquired at different times.

Conveniently, the phase of training also comprises the steps of:

- spatial division of the test tunnel into spatial sub-elements; and
- subdivision of the data for each spatial sub-element.

The step of provision of a defect is, therefore, carried out for each spatial sub-element and the step of processing is defined for each spatial sub-element to obtain relevant vulnerability sub-indexes.

In accordance with a preferred embodiment, the artificial neural network used in this method is a convolutional neural network.

Convolutional neural networks process the images by using a filter to scan or convolve over the pixels of the input image to create a feature map which is then correlated to the output. Specifically, a square search area, called a filter, is used to identify the presence of a feature of interest (e.g., a structural defect) to produce a feature map. This feature map is then correlated with the predictor (e.g., the probability of having a pixel class). The convolutional neural network will produce multiple feature maps that identify the combination of factors that produce the output.

For this reason, following the phases of acquisition, the method also comprises a phase of digitization of the data themselves to convert them into an image.

The image will be represented by a 4D tensor with the following form:

Batch size × Width × Length × Channels
where:

    Batch size: is the number of samples processed before updating the model. If data were available for n time periods, the batch size value would correspond to n.
    Width: is the width of the image.
    Length: is the length of the image.
    Channels: is the number of input data.

The first step is to define the size representing the dimensions of the tunnel. The tunnel is then divided horizontally and vertically into the spatial sub-elements to obtain a two-dimensional image of the tunnel formed by a plurality of pixels, each corresponding to a spatial sub-element.

At this point, each pixel is given an index that corresponds to the extent of the defect depending on the structural and geomorphological features of the tunnel and of the construction site, and an index that depends on the impact of the geomorphological phenomenon on the defect itself.

Similarly, the output is provided in the form of an image from which the vulnerability index is extrapolated.

The convolutional neural network involves a plurality of levels.

In the present case, the convolutional neural network comprises the following levels:
Input level, 2D convolutional level, ReLU activation function, 2D convolutional transposition level, ultimate activation function, prediction.

The first layer is the input layer of the image as previously described.

The 2D convolutional layer is responsible for finding correlations between various input data by generating feature maps through convolution and the use of an activation function.

Convolution is achieved by using a filter (or kernel), which is a small matrix of numbers applied to the input.

The hyper-parameters characterizing this level are:

- Filter size

- Number of filters

- Pitch

**-**    Filling

For a given size of input (i), kernel (k), filling (p) and pitch (s), the size of the feature map (fm) is:

$$fm = i+2p-ks+1$$

The feature maps are then passed through a non-linear activation function that decides whether a neuron in the network should be activated or not. This means that the activation function determines whether or not the neuron's input to the network is important in the prediction process using simpler mathematical operations.

The Rectified Linear Unit (ReLU) is the most widely used activation function in almost all convolutional neural networks.

ReLU carries out a threshold operation on each input pixel and sets any value less than 0:

$$f(x) = \text{maximum } (0,x)$$

The 2D convolutional transposition level deconvolves the feature maps using a clipping value (clipping is the opposite of filling) that is automatically generated to produce an output of the same size as the input.

Just like the 2D convolutional layer, this is also defined by the filling and pitch. These filling and pitch values are those that were hypothetically made on the output to generate the input.

For a given feature map size (fm), kernel (k), filling (p) and pitch (s), the output size (o) is:

$$o = (fm+1) \text{ x } s+k-2p$$

The ultimate activation function depends on the type of output desired.

In this case, the required output is a multi-class classification, that is, one that involves managing multiple categories of vulnerability indices, so the softmax function is used.

The softmax function is a tan-sigmoid function that normalizes the value of the input such that its sum is 1, effectively producing the probability that each pixel belongs to each index.

$$\sigma(z)_i = e^{zi} \, / \, \sum_{j=1}^{K} e^{zj}$$

Where z is the vector of the raw outputs resulting from the 2D convolutional transposition level and i is one of the K classes.

Then, the softmax function applies the standard exponential function to each element z; of the input vector z and normalizes these values by dividing by the sum of all these exponentials; this normalization ensures that the sum of the components of the output vector σ(z) is 1.

During the phase of training, a loss function (in this case the Cross Entropy function) is applied since this case requires a multi-class classification output.

The cross-entropy loss function is also called logarithmic loss or logistic loss. Each expected index probability is compared with the desired output of the actual index 0 or 1 and a score/loss is calculated that penalizes the probability based on how far it is from the actual expected value. The penalty is logarithmic in nature and provides a high score for large differences close to 1 and a small score for small differences trending toward 0.

The goal is to minimize the loss, the lower the loss the better the model. A perfect model has a cross-entropy loss of 0.

In this case, sparse categorical cross entropy is preferably used.

During the phase of training, the number of epochs indicating how many times the algorithm is trained on a single image must be chosen. This is a value between 0 and infinity and is generally increased until the loss function stops varying. Too small epochs can cause underfitting of the model, while too large epochs can cause overfitting of the model.

Regarding descending gradient analysis, adaptive moment estimation (Adam) is preferably used, which is a method that calculates adaptive learning rates for each parameter. In addition to storing an exponentially decaying mean of past square gradients $v_t$, Adam also maintains an exponentially decaying mean of past gradients $m_t$, such as moment:

$$_t = m\beta_1 \, m_{t-1} +(1\text{-}\beta_1)g_t$$

$$_t = v\beta_2 \, v_{t-1} +(1\text{-}\beta_2)g_t^2$$

where $m_t$ and vt are estimates of the first moment (the mean) and of the second moment (the non-centered variance) of the gradients $g_t$ and $t$ is the number of iterations (starting from 1), respectively. Because $m_t$ and vt are initialized as vectors of zeros, Adam's authors observe that they are skewed toward zero, especially during the initial time steps and especially when the decay rates are small (i.e., $\beta_1$ and $\beta_2$ are close to 1).

These biases are then counteracted by calculating bias-corrected first and second moment estimates, which are then used to update the parameters.

As is well known, during the training process of a convolutional neural network, the model improves its performance epoch by epoch until it begins to deteriorate; this phenomenon is called "overfitting" and occurs especially when a high value of epochs is used.

To avoid this circumstance, it is possible to stop training early. With early stopping, the model is evaluated on a data set after each epoch. If the performance of the model on the data set starts to deteriorate (e.g., loss starts to increase or accuracy starts to decrease), the training process is stopped.

The early stop must be configured before it can be used. The three elements to be considered are:

- Model performance monitoring: represents the parameter to be considered in the phase of training, which in this case is the loss function. Specifically, it will be monitored when it stops decreasing.
- Trigger to stop training: it is also called "patience" and tells the algorithm after how many epochs it should stop without decreasing the cost function.
- The choice of the model to be used: for early stopping of work, in each epoch a comparison must be made with the model of the previous epoch so as to determine whether there has been an improvement. Therefore, the code is set up so as to save the model each time it is improved so that it can then be used in the event of an early stop.

At this point, after the phase of training, there is the phase of examination. During this phase, input data are fed into the artificial trained neural network and it is observed how this is able to make a prediction of the required output starting from the inputs.

Since the softmax function was used as the last activation function, the generic element $a_{i,j,k}$ of the tensor will be a value in the range [0, 1] representing the probability $p(k)$ of having index $k$ in pixel $i,j$.

Preferably, in this case, the raw output of the convolutional neural network is exploited by considering the probability of having each index in each pixel.

This allows the end user to know the areas with higher probability of obtaining the worst index. Therefore, the most useful form of output is the entire tunnel image with the identification of pixels having higher probability of a high vulnerability index.

Finally, by means of the visualization software of a known type, the obtained vulnerability indices are graphically represented on a two-dimensional graphical representation of the tunnel.

According to a further aspect, this invention also relates to a method for training an artificial neural network as previously described.

Specifically, the training method according to the invention comprises at least one phase of provision of an artificial neural network and at least one phase of training of the artificial neural network.

The phase of training comprises at least the following steps:

- provision as input of at least a first data set relating to the construction properties of a test tunnel and to the geomorphological properties of the construction site of the test tunnel;
- provision as input of at least a second data set relating to the structural defects found in the test tunnel;
- provision as input of at least a third data set relating to at least one geomorphological phenomenon impacting the construction site;
- provision as input of a defect found in the tunnel, possibly classified into defect levels, carried out by an operator in a controlled manner;
- processing of the correlations between said at least one first data set, said at least one second data set and said at least one third data set to obtain as output a vulnerability index of the test tunnel, carried out by an operator in a controlled manner;
- repetition of the steps of provision and processing for at least one different test tunnel and/or different geomorphological phenomena to obtain the artificial trained neural network.

It has in practice been ascertained that the described invention achieves the intended objects, and in particular, the fact is emphasized that this method implemented by means of an electronic processor for calculating the structural vulnerability of a tunnel makes it possible to reduce the time required to determine the vulnerability index of the tunnel.

In addition, this method makes it possible to obtain vulnerability indices that are accurate and reliable.

Finally, this method allows obtaining predictive indices of the structural vulnerability of the tunnel.

**Claims**

1. Computer-implemented method for the calculation of the structural vulnerability of a tunnel, **characterized by** the fact that it comprises the following phases:

     - acquisition of at least one data set relating to structural characteristics of a tunnel under consideration and to the geomorphological characteristics of the construction site of said tunnel under consideration;
     - provision of said first data set as input to an artificial trained neural network;
     - processing of said data by said trained neural network to obtain as output at least one vulnerability index of said tunnel under consideration, relating to the probability of the occurrence of damage to the tunnel under consideration itself depending on a geomorphological phenomenon;
     - mapping of said tunnel under consideration depending on said vulnerability index.

2. Method according to claim 1, **characterized by** the fact that the data of said first set are selected from the list comprising: type of tunnel, size of the tunnel, physical-mechanical characteristics of the structural elements making up the tunnel, construction materials, geographic location, type of ground, presence of watercourses, seismic risk of the construction site, presence of additional infrastructure.

3. Method according to one or more of the preceding claims, **characterized by** the fact that, following a phase of acquisition of a first data set relating to the structural characteristics of said tunnel under consideration and to the geomorphological characteristics of said construction site, it comprises the phases of:

> - acquisition of at least a second data set relating to the structural defects found in said tunnel under consideration; and/or
> - acquisition of at least a third data set relating to at least one geomorphological phenomenon impacting said construction site;
> - provision of said second data set and/or of said third data set as input to said artificial trained neural network at the same time as the provision of said first data set.

4. Method according to one or more of the preceding claims, **characterized by** the fact that the data of said second set are selected from the list comprising: presence and extent of seepage, presence and extent of cracks, presence and extent of damage to the pavement, radial displacement of the tunnel lining layer.

5. Method according to one or more of the preceding claims, **characterized by** the fact that the data of said third set are selected from the list comprising: occurrence of flood phenomenon and relevant extent, occurrence of seismic phenomenon and relevant magnitude, changes in the traffic conditions within said tunnel, implementation of new infrastructure in the proximity of said construction site.

6. Method according to one or more of the preceding claims, **characterized by** the fact that said phases of data acquisition are carried out at least partly by means of at least one scanning device adapted to scan said tunnel under consideration.

7. Method according to one or more of the preceding claims, **characterized by** the fact that said phases of data acquisition are carried out at least partly by loading pre-measured data.

8. Method according to one or more of the preceding claims, **characterized by** the fact that said phase of processing comprises at least the following steps:

> - calculation and assignment of a damage deviation value to each data item in the first set depending on the second data set;
> - calculation and assignment of a phenomenological deviation value to each data item in the third set depending on the second data set;
> - combination of the damage deviation values and of the phenomenological deviation values to obtain the vulnerability index of the tunnel under consideration.

9. Method according to one or more of the preceding claims, **characterized by** the fact that at least one of said data sets comprises hypothesized data and by the fact that said phase of processing is carried out on said hypothesized data.

10. Method according to one or more of the preceding claims, **characterized by** the fact that said phase of processing comprises the steps of:

> - spatial subdivision of said tunnel under consideration into spatial sub-elements;
> - subdivision of said data for each spatial sub-element;

wherein said step of calculation and assignment of a damage deviation value is carried out for each spatial sub-element and by the fact that said step of combination is carried out for each spatial sub-element to obtain respective vulnerability sub-indexes.

11. Method according to one or more of the preceding claims, **characterized by** the fact that said phase of mapping is carried out by means of chromatic subdivision of a two-dimensional representation of said tunnel under consideration depending on its relevant vulnerability index.

12. Method according to one or more of the preceding claims, **characterized by** the fact that, prior to said processing phase, it comprises at least one phase of providing an artificial neural network and at least one phase of training said artificial neural network, said training phase comprising at least the following steps:

> - provision as input of at least a first data set relating to the construction properties of a test tunnel and to the geomorphological properties of the construction site of the test tunnel;
> - provision as input of at least a second data set relating to the structural defects found in the test tunnel;
> - provision as input of at least a third data set relating to at least one geomorphological phenomenon impacting the construction site;
> - provision as input of a defect found in the tunnel, possibly classified into defect levels, carried out by an operator in a controlled manner;
> - processing of the correlations between said at least one first data set, said at least one second data set and said at least one third data set to obtain as output a vulnerability index of the test tunnel, carried out by an operator in a controlled manner

- repetition of said steps of provision and processing for at least one different test tunnel and/or different geomorphological phenomena to obtain the artificial trained neural network.

13. Method for training an artificial neural network **characterized by** the fact that it comprises at least one phase of provision of an artificial neural network and at least one phase of training of said artificial neural network, said phase of training comprising at least the following steps:

- provision as input of at least a first data set relating to the construction properties of a test tunnel and to the geomorphological properties of the construction site of the test tunnel;
- provision as input of at least a second data set relating to the structural defects found in the test tunnel;
- provision as input of at least a third data set relating to at least one geomorphological phenomenon impacting the construction site;
- provision as input of a defect found in the tunnel, possibly classified into defect levels, carried out by an operator in a controlled manner;
- processing of the correlations between said at least one first data set, said at least one second data set and said at least one third data set to obtain as output a vulnerability index of the test tunnel, carried out by an operator in a controlled manner;
- repetition of said steps of provision and processing for at least one different test tunnel and/or different geomorphological phenomena to obtain the artificial trained neural network.

## EUROPEAN SEARCH REPORT

Europäisches
Patentamt
European
Patent Office
Office européen
des brevets

| Application Number |
|---|
| EP 24 20 3543 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ABDULLAH ANSARI: "Deep learning model for predicting tunnel damages and track serviceability under seismic environment", MODELING EARTH SYSTEMS AND ENVIRONMENT, vol. 9, no. 1, 20 October 2022 (2022-10-20), pages 1349-1368, XP093152481, DOI: 10.1007/s40808-022-01556-7 | 1-5,7-13 | INV.<br>G06F30/13<br>G06F30/27<br><br>ADD.<br>G06F119/04 |
| A | * the whole document *<br>* abstract *<br>* figure 5; table 2 *<br>* section "Selection of input variables" *<br>* section "Model formulation" *<br>* section "Methodology" * | 6 | |
| A | ZHONGKAI HUANG: "Fragility assessment of tunnels in soft soils using artificial neural networks", UNDERGROUND SPACE, vol. 7, no. 2, 9 September 2021 (2021-09-09), pages 242-253, XP093152260, DOI: 10.1016/j.undsp.2021.07.007<br>* the whole document *<br>* abstract *<br>* figure 1 *<br>* section 2.1 *<br>* section 2.2 *<br>* section 2.3 *<br>* section 3.1 *<br>* section 4 * | 1-13 | |

**TECHNICAL FIELDS SEARCHED (IPC)**

G06F

-/--

The present search report has been drawn up for all claims

| Place of search | Date of completion of the search | Examiner |
|---|---|---|
| Munich | 25 February 2025 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt
European
Patent Office
Office européen
des brevets

# EUROPEAN SEARCH REPORT

**Application Number**

EP 24 20 3543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GRIGORIOS TSINIDIS: "Developments in Seismic Vulnerability Assessment of Tunnels and Underground Structures", GEOTECHNICS, vol. 2, no. 1, 26 February 2022 (2022-02-26), pages 209-249, XP093152135, DOI: 10.3390/geotechnics2010010 * the whole document * * abstract * * section 3.1 * * tables 1,3 * | 1-13 | |
| A | BERNARDINO CHIAIA: "Deep convolutional neural network for multi-level non-invasive tunnel lining assessment", FRONTIERS OF STRUCTURAL AND CIVIL ENGINEERING, vol. 16, no. 2, 1 February 2022 (2022-02-01), pages 214-223, XP093152460, DOI: 10.1007/s11709-021-0800-2 * the whole document * * abstract * * section 3.1 * | 1-13 | **TECHNICAL FIELDS SEARCHED (IPC)** |

The present search report has been drawn up for all claims

| Place of search | Date of completion of the search | Examiner |
|---|---|---|
| Munich | 25 February 2025 | Rungger, Matthias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................................
& : member of the same patent family, corresponding
document

EPO FORM 1503 03.82 (P04C01)

page 2 of 2